Europäisches Patentamt

European Patent Office

Office européen des brevets

(11) Publication number: **0 159 523**
**B1**

(12) EUROPEAN PATENT SPECIFICATION

(45) Date of publication of patent specification: **13.06.90**

(51) Int. Cl.⁵: **G 01 T 1/29**

(21) Application number: **85103029.6**

(22) Date of filing: **15.03.85**

(54) Autoradiographic process.

(30) Priority: **15.03.84 JP 50292/84**

(43) Date of publication of application:
**30.10.85 Bulletin 85/44**

(45) Publication of the grant of the patent:
**13.06.90 Bulletin 90/24**

(84) Designated Contracting States:
**CH DE FR LI NL SE**

(56) References cited:
**EP-A-0 111 154**
**US-A-4 236 078**
**US-A-4 389 670**

**NATURE, vol. 274, no. 5666, 6th July 1978,**
**pages 87-89, Macmillan Journals Ltd.,**
**Basingstoke, GB; J. STANLEY et al.: "A different**
**approach to RNA sequencing"**

(73) Proprietor: **FUJI PHOTO FILM CO., LTD.**
**210 Nakanuma Minami Ashigara-shi**
**Kanagawa 250-01 (JP)**

(72) Inventor: **Hashiue, Masakazu c/o Fuji Photo**
**Film Co., Ltd.**
**No. 798, Miyanodai Kaisei-machi**
**Ashigara-kami-gun Kanagawa (JP)**

(74) Representative: **Patentanwälte Grünecker,**
**Kinkeldey, Stockmair & Partner**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention
#### Field of the Invention

The present invention relates to an radiographic process.

### Description of Prior Arts

There has been heretofore known a radiographic process termed "autoradiography" or "radioautography" comprising steps of: introducing a radioactively labelled substance into an organism; placing the organism or a part of tissue of the organism (that is, a sample or specimen) and a radiographic film such as a high-speed type X-ray film together in layers for a certain period of time to expose said film thereto; and obtaining the locational information on the radioactively labelled substance in said sample from the resolved pattern of the film. The autoradiography has been utilized, for example, to investigate the pathway and state of metabolism, absorption, and excretion of the substance introduced in the organism in detail. Such autoradiography is described, for instance, in the following literature: Method in Biochemical Experiment, Volume 6, Method in Tracer Experiment I, 271—289, "8. Autoradiography" by Toru Sueyoshi & Akiyo Shigematsu (Tokyo Kagaku Dozin Ltd., 1977).

The autoradiography has been also utilized to obtain locational information on the radioactively labelled tissue of an organism and/or the radioactively labelled substances originating from an organism, which present on a medium. For instance, there is known an autoradiography comprising steps of: labelling organism-originating biopolymers such as proteins or nucleic acids with a radioactive element; resolving a mixture of the radioactively labelled biopolymers, derivatives thereof, cleavage products thereof, or synthetic products thereof on a support medium through a resolving process such as gel electrophoresis; placing the gel support and a high-speed X-ray film together in layers for a certain period of time to expose said film to the gel support, developing said film, obtaining the locational information on the radioactively labelled substances from the developed film, and then performing the identification of the polymeric substances and isolation of the polymeric substances based on the obtained locational information.

Recently, the autoradiography has been effectively used especially for determining the base sequence of a nucleic acid such as DNA. Therefore, the autoradiography is thought to be a very useful means in the field of structural determination of polymeric substances orginating from organisms.

Nevertheless, such useful autoradiography is not free from several drawbacks in the practical use.

As described above, in the conventional autoradiography, a support medium containing radioactively labelled substances is brought into contact in the form of layers with radiographic film such as a high-speed X-ray film for a given time so that the film is exposed to the radiation and then a visible image indicating the positions of the radioactive substances is obtained.

The primary drawback resides in that the exposure operation should be carried out at a low temperature (e.g., 0°C to −80°C) for a long period of time (e.g., several tens hours to several days). This is because intense radioactivity is not imparted to the substances to be labelled, a latent image is silver salt of the film formed by exposure to a radiation or light emmision tends to fade at a relatively high temperature such as room temperature and to be undevelopable, and the silver salt is easily fogged chemically through migration of deleterious ingredients from the support medium carrying the sample thereto.

The second drawback resides in that the exposure operation ought to be done in a dry state to prevent the radiographic film from wetting and being chemically fogged which bring about decreasing the quality of an image.

When the image obtained by the autoradiography is fogged as described above, the accuracy of locational information on the radioactively labelled substances is lowered. For these reasons, the procedure of the conventional autoradiography is complicated as a whole.

The third drawback resides in that the radiographic film is readily influenced by physical irritation and produces fogging under application of physical pressure caused by the contact of the film with the hands of operators or the instrument in the exposure operation. In order to avoid the occurrence of physical fogging on the radiographic film, high skill and caution must be taken in the handling of the film. In addition, the exposure over a long period of time causes natural radioactivities incorporated in the support medium to take part in the exposure of the radiographic film. Thus, the accuracy of the locational information on the labelled substances is lowered. In order to eliminate such interference, parallel experiments using control samples are generally performed to find out proper exposure time, but such more experiments make the procedure complicated.

Further, in the conventional autoradiography it is necessary to measure the location of the radioactively labelled substances on the visualized autoradiograph by eye observation to obtain the desired information and a long time is taken for such eye measurement.

To solve the above-described problems attached to the conventional autoradiography, an autoradiographic process using a stimulable phosphor sheet comprising a stimulable phosphor as a radiosensitive material in place of the radiographic film and kits employed therefor is described in EP—A—0 111 154 which is prior art according to Article 54. Paragraphs 3 and 4 of the EPC. One of the kits is a separation type which comprises a stimulable phosphor sheet and a support medium for resolution, and the other one is an integrated type which comprises a stimulable phospor sheet and a support medium provided thereon.

The stimulable phosphor sheet is also called a radiation image storage panel, disclosed in, for example, US—A—4,239,968 and thus its general constitution is already known.

The stimulable phosphor sheet comprises a stimulable phosphor, in which said phosphor is capable of absorbing radiation energy having passed through an object or radiated from an object; and releasing the radiation energy stored therein as stimulated emission when said sheet is excited with an electromagnetic wave (stimulating rays) such as visible or infrared rays. The stimulated emission is photoelectrically detected to obtain electric signals, which is then reproduced as a visible image on a display device such as CRT or on a recording medium such as a photographic film, or represented locational information in the form of symbols and/or numerals.

According to the autoradiographic process using the stimulable phosphor sheet, not only the exposure time is greatly shortened but also the accuracy of the locational information on the radioactively labelled substances is not lowered even when the exposure is carried out at an ambient temperature or a temperature therearound. The exposure operation previously taking many hours under chilling, is made easy and hence, the autoradiographic procedure can be greatly simplified.

Further, the employment of the stimulable phoshor sheet in the autoradiography as a radiosensitive material substantially prevents either the chemical fog or the physical fog, both of which are the unavoidable problems in the use of a conventional radiographic film. This provides an advantageous feature in the improvement of the accuracy of the locational information and workability of the autoradiography. It is also possible to easily reduce or eliminate such a disadvantageous effect on the accuracy that is caused by the natural radioactivity or the radioactivity of impurities contained in the support medium, by applying a certain electric processing to the locational information stored in the stimulable phosphor sheet.

Furthermore, the visualization is not always required to obtain the locational information on the radioactively labelled substances which are stored and recorded on the stimulable phosphor sheet, that is, the information can be obtained in the desired forms such as a visible image, symbols and/or numerical values and combinations thereof by scanning the phosphor sheet with an electromagnetic wave such as a laser to read out the locational information. It is also possible to get the required information in various forms by further processing the obtained image information by use of an appropriate electric means. Namely, the information can be obtained as an alternative information by subjecting the image information to certain data processing. For example, the electric signals or digital signals having the locational information on the labelled substances obtained by reading out the phosphor sheet may be analyzed by means of a computer etc. to obtain a desired information on the organism.

### Summary of the Invention

The present inventor has now found that a stimulable phosphor sheet combined with a support medium in layers (in the superposed form) can be subjected to the read-out operation in the autoradiography for obtaining the locational information on the radioactively labelled substances resolved on the support medium, said operation comprising irradiating the phosphor sheet having absorbed and stored radiation energy emitted by the labelled substances with stimulating rays and detecting stimulated emission given thereby. Namely, the inventor has found that the autoradiographic procedure can be further simplified without lowering the accuracy of the resulting locational information.

The present invention provides an autoradiographic process for obtaining information on one or two dimensional location of radioactively labelled substances originating from biopolymer on a support medium comprising:

the steps set forth in claim 1;

the radioactively labelled substances originating from the organism on a support medium.

Preferred embodiments of the invention are subject matter of the dependent claims.

In the invention, the term "locational information" on the radioactively labelled substances resolved on the support medium means to include a variety of information relating to the location of the radioactively labelled substances or the aggregation thereof, being present in the support medium, such as the location, the shape, the concentration, the distribution and combinations thereof.

According to the present invention, the stimulable phosphor sheet combined with a support medium in layers (in the superposed form) can be subjected to the read-out operation without separating said phosphor sheet from the support medium even after the exposure operation which is conducted by arranging said phopshor sheet and support medium in layers. Particularly, when a structure where the stimulable phosphor sheet and the support medium were integrated is employed, an operation for scratching the medium such as a gel off the phosphor sheet or washing the medium off the phosphor sheet with an appropriate solvent is not required so that the autoradiographic procedure can be simplified.

Further, it is not necessary to specifically conduct the exposure operation in a dark room, if the read-out system (e.g., read-out device) for reading out the locational information stored and recorded in the stimulable phosphor sheet is shielded from penetration of light from outside. The exposure operation is caríred out by allowing the stimulable phosphor sheet combined with the support medium in layers (or the sheet provided with the support medium) to stand within the read-out system for a certain period of time and subsequently the read-out operation can be conducted. Particularly, even when the support medium and the stimulable phosphor sheet are independently provided, it is not required to place them in a dark room for closely contacting with each other. Accordingly, it becomes possible to combine the exposure operation with the read-out operation in one successive stage.

Brief Description of Drawings

Figure 1 shows a support medium for resolution and a stimulable phosphor sheet in a superposed form.

Figure 2 schematically shows an embodiment of the reead-out system for reading out the locational information on the radioactively labelled substances in a support medium, which is stored and recorded in the stimulable phosphor sheet according to the present invention.

Detailed Description of the Invention

The stimulable phosphor sheet used in the present invention basically comprises a support and at least one phosphor layer, and the phosphor layer comprises a binder and a stimulable phosphor dispersed therein. Further, a transparent protective film is generally provided on the free surface (surface not facing the support) of the phosphor layer to keep the phosphor layer from chemical deterioration or physical shock.

The stimulable phosphor sheet of such constitution can be prepared, for instance, by the following procedure.

A material of the support of the stimulable phosphor sheet can be selected from those employed in conventional radiographic intensifying screens or those employed in known stimulable phosphor sheets. Examples of the support material include plastic films such as films of cellulose acetate and polyethylene terephthalate, a metal sheet such as aluminum foil, paper sheets such as an ordinary paper, baryta paper and resin-coated paper, or the like. On the surface of the support to receive the phosphor layer may be provided one or more of an adhesive layer, a light-reflecting layer, a light-absorbing layer, etc. Further, the phosphor layer-side surface of the support (or the surface of an adhesive layer, light-reflecting layer or light-absorbing layer in the case where such layers provided on the phosphor layer) may be provided with protruded and depressed portions, as described in EP—A—0 092 241.

Onto the above-mentioned support, a phosphor layer is provided. The phosphor layer comprises basically a binder and stimulable phosphor particles dispersed therein.

The stimulable phospor, as described hereinbefore, gives stimulated emission when excited with stimulating rays after exposure to a radiation. From the viewpoint of practical use, the stimulable phosphor is desired to give stimulated emission in the wavelength region of 300—500 nm when excited by stimulating rays in the wavelength region of 400—900 nm. Preferably employed in the invention is an europium activated alkaline earth metal fluorohalide phosphor, but any other stimulable phosphor can be employed in the invention.

Examples of the stimulable phosphor include: SrS:Ce,Sm, SrS:Eu,Sm, ThO$_2$:Er, and La$_2$O$_2$S:Eu,Sm, as described in US—A—3,859,527;

ZnS:Cu,Pb,BaO·xAl$_2$O$_3$:Eu, in which $x$ is a number satisfying the condition of $0.8 \leqq x \leqq 10$, and M$^{2+}$O·xSiO$_2$:A, in which M$^{2+}$ is at least one divalent metal selected from the group consisting of Mg, Ca, Sr, Zn, Cd and Ba, A is at least one element selected from the group consisting of Ce, Tb, Eu, Tm, Pb, Tl, Bi and Mn, and $x$ is a number satisfying the condition of $0.5 \leqq x \leqq 2.5$, as described in U.S. Patent No. 4,326,078;

(Ba$_{1-x-y}$,Mg$_x$,Ca$_y$)FX:aEu$^{2+}$, in which X is at least one element selected from the group consisting of Cl and Br, $x$ and $y$ are numbers satisfying the conditions of $0 < x + y \leqq 0.6$, and xy $\neq$ 0, and $a$ is a number satisfying the condition of $10^{-6} \leqq a \leqq 5 \times 10^{-2}$, as described in JP—A—55(1980)—12143;

LnOX:xA, in which Ln is at least one element selected from the group consisting of La, Y, Gd and Lu, X is at least one element selected from the group consisting of Cl and Br, A is at least one element selected from the group consisting of Ce and Tb, and $x$ is a number satisfying the condition of $0 < x < 0.1$, as described in the above-mentioned US—A—4,236,078; and

(Ba$_{1-x}$,M$^{II}_x$)FX:yA, in which M$^{II}$ is at least one divalent metal selected from the group consisting of Mg, Ca, Sr, Zn and Cd, X is at least one element selected from the group consisting of Cl, Br and I, A at least one element selected from the group consisting of Eu, Tb, Ce, Tm, Dy, Pr, Ho, Nd, Yb and Er, and $x$ and $y$ are numbers satisfying the conditions of $0 \leqq x \leqq 0.6$ and $0 \leqq y \leqq 0.2$, respectively, as described in US—A—4,239,968.

In the first place, phosphor particles and a binder are added to an appropriate solvent (e.g., a lower alcohol, chlorine atom-containing hydrocarbon, ketone, ester, ether), and then they are well mixed to prepare a coating dispersion comprising the phosphor particles dispersed in the binder solution.

Examples of the binder include proteins such as gelatin and synthetic polymers such as polyvinyl acetate, nitrocellulose, polyurethane, polyvinyl alcohol, linear polyester and polyalkyl (meth)-acrylate.

The ratio between the binder and the phospor in the coating dispersion generally is within the range of from 1:8 to 1:40 (binder:phosphor, by weight).

The coating dispersion is then coated evenly on a support to form a coating layer, and the coating layer is gradually heated to dryness to prepare the phosphor layer on the support. The thickness of the phosphor layer generally ranges from 50 to 500 μm.

On the surface of the phosphor layer opposite to the surface to face the support, a transparent protective film may be provided to protect the phosphor layer from physical and chemical deterioration. Examples of the material of the protective film include cellulose acetate, polymethyl methacrylate, polyethylene terephthalate and polyethylene. The thickness of the transparent protective film generally ranges from 0.1 to 20 µm.

Moreover, the surface of the stimulable phosphor sheet on which a support medium is superposed may be previously subjected to any of various surface treatments to increase the adhesion between the phosphor sheet and the support medium. For example, the protective film-side surface (or the support-side surface) may be previously subjected to surface activation treatment to impart hydrophilic property thereto.

The support medium for resolving (or developing) a radioactively labelled substances originating from an organism is selected from those including a medium for electrophoresis such as a gel support e.g., polyacrylamide gel. The support medium is generally subjected to the exposure operation in a dry state, but it may be used in a wet state such as containing a resolving solvent, if desired. Further, the support medium can be encased or supported by an accessory means such as glass plate or plastic sheet.

The resolving support medium may be originally provided on the stimulable phosphor sheet to give an integrated structure. The intensity of a radiation (such as α-rays, β-rays or the like) radiating from the radioactively labelled substances is so low that the support medium is generally provided directly on the surface of the phosphor layer (or the surface of the protective film when used) of the stimulable phosphor sheet.

The kits for the autoradiographic process (separation type and integrated type) comprising the support medium for resolution and the stimulable phosphor sheet as described above are described more in detail in the aforementioned EP—A—0 111 154.

The autoradiographic process of the present invention will be described hereinbelow.

Examples of the sample to be resolved in the present invention include radioactively labelled organism-originating substances such as biopolymers, for instance, proteins, nucleic acids, their derivatives, their cleavage products, and their synthetic products. However, the organism-originating substances to be applied to the process of the invention are by no means restricted to the biopolymers as described above. The radioactivity label can be attached to the sample by introducing thereinto a radioactive element by appropriate means. Any radioactive element can be employed in the invention, provided that the radioactive element emits a radiation such as α-rays, β-rays, γ-rays, neutron beams and X-rays. Typical examples of the radioactive elements include $^{32}P$, $^{14}C$, $^{36}S$, $^{3}H$, and $^{125}I$.

Methods for resolving (or developing) the radioactively labelled substances on a support medium, for instance, methods for electrophoretically resolving a sample thereon are well known by those skilled in the art, and any of these methods can be employed in the present invention.

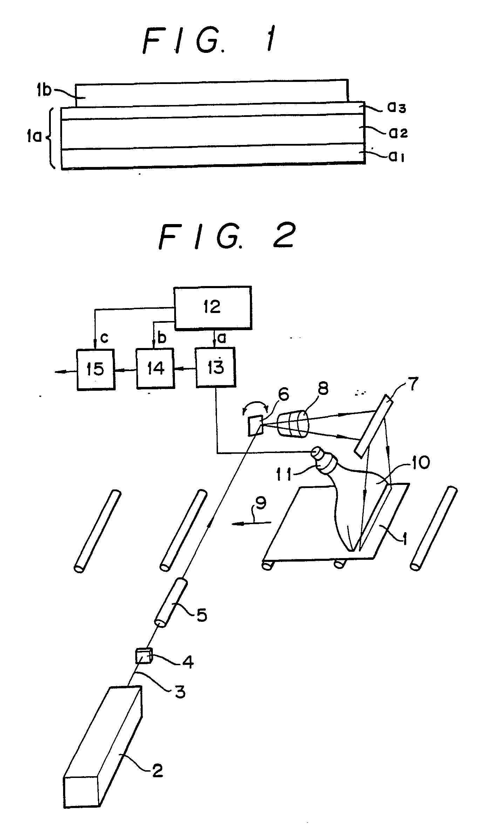

The exposure operation is then carried out by placing the stimulable phosphor sheet and the support medium having the radioactively labelled substances resolved thereon together in layers in a dark room or in a light-shielded box for a certain period of time. Since the intensity of a radiation radiating from the labelled substances in the support medium is usually low, the phosphor sheet and the support medium can be superposed so as to bring the surface of the phosphor layer (or the surface of the protective film) into contact with the support medium as shown in Figure 1.

Figure 1 is a schematic view showing a form in which the support medium for resolution and the stimulable phosphor sheet are combined together in layers (or superposed), in which numeral 1a represents the stimulable phosphor sheet comprising the support ($a_1$), the phosphor layer ($a_2$) and the protective film ($a_3$), and numeral 1b represents the support medium for resolution.

Alternatively, the support medium may be superposed on the support-side surface the stimulable phosphor sheet.

Since the superposed form is kept in the subsequent read-out operation, it is desired that the support medium and the stimulable phosphor sheet are so fixed not to slip off from each other. For instance, either or both of the support medium and the stimulable phosphor sheet may be mechanically processed so that they are fixed to each other in layers. The support medium and the stimulable phosphor sheet are held by transparent glass plates to fix each other.

By causing the stimulable phosphor sheet to absorb at least a portion of a radiation radiating from the radioactively labelled substances in the support medium in the exposure operation, an autoradiograph is recorded as a radiation energy-stored image on the phosphor sheet. In the case that the read-out system of the stimulable phosphor sheet is shielded from light, the exposure can be performed therein after the support medium and the phosphor sheet are combined together in layers even in a light room as described hereinafter.

The exposure time varies depending on the radiation intensity of the radioactively labelled substance contained in the support medium, the amount of said substances and the sensitivity of the stimulable phosphor sheet. In the present invention using the stimulable phosphor sheet as a radiosensitive material, however, the exposure time can be greatly shortened as compared with that required in the case using the conventional radiographic film. Further, the precise control of the exposure time is not particularly required, since the locational information on the radioactively labelled substances can be suitably pro-

cessed in the subsequent read-out operation through applying various electrical processing thereto according to the intensity and distribution of energy stored in the phosphor sheet and the desired information form, for example, by setting the amplification of electric signals to an appropriate value.

There is no specific limitation on the temperature employed for the exposure operation, and it is possible to perform the exposure at an ambient temperature within the range of 10 to 35°C in the autoradiography according to the present invention. If desired, the exposure operation may be, of course, performed at a low temperature of approximately 5°C or lower as in the conventional autoradiography.

In the case of using the support medium and the stimulable phosphor sheet in the integrated form, there is no need of performing the step of combining them together in layers before the exposure operation. The radiation energy stored in the phosphor sheet in the course of resolution of a sample on the support medium is released as light emission by irradiating the phosphor sheet with appropriate light or heat rays. More in detail, since the stimulable phosphor sheet is exposed to the natural radioactivity contained in a sample and to a radiation from the running radioactively labelled substances during the resolution, the radiation energy-stored image different from that to be read out (image showing the desired autoradiograph) is formed on the phosphor sheet to introduce a noise into the desired radiation energy-stored image. Thus, when the influence of the noise on the autoradiograph is not ignorable, it is desired to erase the noise before the radiation energy-stored image having the desired autoradiograph is formed on the stimulable phosphor sheet.

The support medium having the sample resolved thereon as such or after optionally applying thereto a drying treatment or a resolved substance-fixing treatment is subjected to the noise-erasing operation.

Subsequently, the read-out operation for the autoradiograph stored and recorded in the stimulable phosphor sheet is performed. The phosphor sheet combined together with the support medium in layers (in the superposed form) is subjected as such to the read-out operation.

A method for reading out the autoradiograph stored and recorded in the stimulable phosphor sheet, which has the locational information on the radioactively labelled substances will be described briefly, referring to an embodiment of a read-out system shown in Figure 2 of the accompanying drawings.

Figure 2 schematically shows an embodiment of the read-out system for reading out the information on one or two dimensional location of the radioactively labelled substances, which is stored and recorded in the support medium-superposed stimulable phosphor sheet 1 shown in Figure 1 wherein numeral 1a represents the stimulable phosphor sheet and 1b represents the support medium.

In the read-out system, the read-out operation is carried out in the following manner.

Laser beam 3 generated by a laser source 2 first passes through a filter 4 to cut off a light beam in the wavelength region corresponding to the wavelength region of stimulated emission to be emitted from the phosphor sheet 1a in response to stimulation with the laser beam 2. The size of the beam diameter of the laser beam 2 passed through the filter 4 is strictly controlled by means of a beam expander 5. The laser beam is subsequently deflected by a beam deflector 6 such as a galvanometer mirror and reflected by a plane reflection mirror 7. The deflected beam then impinges one-dimensionally upon the support medium 1b of the support medium-superposed stimulable phosphor sheet 1. An f-θ lens 8 is provided between the beam deflector 6 and the plane reflection mirror 7 so that the beam speed is continuously kept constant when the deflected laser beam is scanned on the support medium 1b.

The laser source 2 used herein is so selected as to avoid overlapping of the wavelength region of the laser beam 4 with the main wavelength region of the stimulated emission to be given away by the stimulable phosphor sheet 1a. The support medium-superposed phosphor sheet 1 is then transferred to the direction along the arrow 9 under the irradiation of the above-mentioned deflected laser beam. Therefore, the whole surface of the stimulable phosphor sheet 1a is subjected to the irradiation of the deflected laser beam through the support medium 1b.

When irradiated with the above-mentioned laser beam, the phosphor sheet 1a gives stimulated emission having the intensity proportional to the radiation energy stored therein. The emission then enters through the support medium 1b into a light guiding sheet 10. The light guiding sheet 10 has a linear edge face for receiving the emission and the edge face is so positioned in the vicinity of the support medium as to correspond to the scanning line on the support medium 1b. The exit of the light guiding sheet 10 is in the form of a ring and is connected to a light-receiving face of a photosensor 11 such as a photomultiplier. The light guiding sheet 10 is made, for instance, by processing a sheet of a transparent thermoplastic resin such as a synthetic acrylic resin, and so constituted that the emission introduced from the linear edge face is transferred to the exit under total reflection within the sheet 10. The stimulated emission from the phosphor sheet 1a is guided in the interior of the light guiding sheet 10 to the exit, and received by the photosensor 11. On the light-receiving face of the photosensor 11 is provided a filter which allows only the light in the wavelength region of the stimulated emission to pass therethrough an cuts off the light in the wavelength region of the stimulating rays (laser beam) so as to detect only the stimulated emission. The stimulated emission detected by the photosensor 11 is converted to electric signals, amplified to electric signals adjusted to an appropriate level in an amplifier 13 according to an amplification degree setting value a provided from a control circuit 12 and transmitted to an A/D converter 14. The adjusted electric signals are then converted to digital signals according to an appropriate scale factor defined by a scale factor setting value b provided from the same control circuit 12, and supplied to a signal processing circuit 15. In the circuit 15, the digital signals are so processed according to the image processing condition setting value c provided from the same control circuit 12 as to give a well-readable image having well adjusted concentration and contrast, and then transmitted to a recording device (not shown), optionally upon storage in a storing means such as a magnetic tape.

The amplification degree setting value a, the scale factor setting value b and the image processing condition setting value c provided from the control circuit 12 can be set, for instance, according to the stored and recorded information obtained by carrying out a preliminary read-out operation prior to the above read-out operation so that a well-readable image having even concentration and contrast can be obtained. Alternatively, when the contents of the radioactive substances contained in a sample are previously known, the setting values can be experimentally set according to the exposure time of the phosphor sheet. Further, the locational information on the radioactively labelled substances can be obtained by detecting the resolved direction of the electrophoretic bands of the radioactively labelled substances in the preliminary read-out operation and then carrying out the final read-out operation along the detected resolved direction.

Various recording devices based on various systems can be employed for the above-described purpose, for instance, a device for visualizing optically by scanning a photosensitive material with a laser beam, etc., a display means for visualizing electrically on CRT, etc., a means for printing a radiation image displayed on CRT by means of video printer, and a means for visualizing on a heat sensitive recording material using thermic rays.

The manner of recording is not restricted to the manner of visualizing the image on the above-mentioned devices, and the information on the two dimensional location of the radioactively labelled substances can be recorded, for example, in the form of numerals and/or symbols.

Further, other suitable methods than the abovedescribed embodiments may be employed for reading out the locational information on the radioactively labelled substances stored in the stimulable phosphor sheet. For instance, the support medium-superposed stimulable phosphor sheet may be irradiated with the stimulating rays on the phosphor sheet-side (namely, the support-side) and the stimulated emission also may be detected therefrom, instead of the irradiation and detection on the support medium-side as described above.

When the read-out system is made to be shielded from light, it is possible to perform the exposure in the system. Thus, there is no need of using a light-shielded box for the exposure. When the erasure section for eliminating the noise is provided in the read-out system, it is not necessary to place the support medium and the stimulable phosphor sheet in layers just before the exposure operation (namely, setting them into the read-out system) and the superposition can be done in any suitable stage after resolving the sample. Further, it is possible to automate all the operations for the erasure, exposure and read-out under controlling the periods of time for the exposure and erasure in the read-out system.

Accordingly, the autoradiographic process can be simplified to substantially comprise the resolving stage and the read-out stage including the exposure. Especially, when the support medium and the stimulable phosphor sheet are previously integrated, the superposition and separation thereof are not needed so that the read-out operation can be directly carried out after the resolution operation. Thus, the locational information on the radioactively labelled substances can be obtained in the desired form such as an image, symbols and/or numerals.

The present invention will be further described by the following example, in which an embodiment of the preliminary procedure for DNA sequencing is described.

The kit used in the following example comprises a stimulable phosphor sheet and a support medium for electrophoresis provided thereon, which was prepared by the following method.

To a mixture of a particulated europium activated barium fluorobromide stimulable phosphor ($BaFBr:Eu^{2+}$) and a linear polyester resin were added successively methyl ethyl ketone and nitrocellulose (nitrification degree: 11.5%), to prepare a dispersion containing the phosphor particles. Subsequently, tricresyl phoshate, n-butanol and methyl ethyl ketone were added to the resulting dispersion. The mixture was sufficiently stirred by means of a propeller agitater to obtain a homogeneous coating dispersion having a viscosity of 25—35 PS (at 25°C).

The coating dispersion was applied to a polyethylene terephthalate sheet (support, thickness: 250 µm) placed horizontally on a glass plate. The application of the coating dispersion was carried out using a doctor blade. The support having a layer of the coating dispersion was then placed in an oven and heated at a temperature gradually rising from 25 to 100°C. Thus, a phosphor layer having a thickness of 300 µm was formed on the support.

On the phosphor layer was placed a polyethylene terephthalate transparent film (thickness: 12 µm; provided with a polyester adhesive layer on one surface) to combine the film and the phosphor layer with the adhesive layer.

Thus, a stimulable phosphor sheet comprising a support, a phosphor layer and a protective film was prepared. The protective film-side surface of the phosphor sheet was treated with glow discharge by allowing the sheet to run at 15 cm distant from an electrode plate on which four half-circular rod electrodes (diameter: 2 cm, length: 40 cm) were fixed in each distance of 10 cm on an insulating plate, in a vacuum tank at pressure of 0.05 mmHg under the conditions of the discharge voltage of 3 kV, the treatment time of 3 s and the electrode current of 0.4 A.

Independently, a polyethylene terephthalate film (thickness: 100 μm) was subjected to the glow discharge treatment on one surface in the same manner as described above and supported by a glass plate provided on the other surface to prepare a covering material for an electrophoretic support medium.

Poly(methyl methacrylate) rectangular spacers (thickness: 1.5 mm) were put between the covering material and the stimulable phosphor sheet, facing each other with the glow discharge-treated surfaces to prepare a mold for forming a support medium. A tris-borate buffer solution of acrylamide (acrylamide content: 8%, crosslinking agent content: 3%) prepared by the known method was poured into the mold to form a slab gel (1.5 mm × 200 mm × 200 mm).

Thus, an integrated kit consisting of a stimulable phosphor sheet, a gel (electrophoretic support medium) and a polyethylene terephthalate film (covering material).

### Example 1
[Separation of DNA to be sequenced and labelling with a radioactive element]

Plasmid DNA of E. coli. (pBR 322) was cleaved by the use of restriction enzyme Hind-III by the known method and 5'-end thereof was labelled with $^{32}P$ to obtain 1 μg of a double helix DNA ($^{32}P$-labelled substance).

The double helix DNA (1 μg) and approx. 1 unit of the restriction enzyme Hae-III were added to 20 μl of 20 mM of tris[tris(hydroxymethyl)aminomethane]-hydrochloric acid buffer solution (pH 7.4) containing 5 mM of magnesium chloride and 1 mM of dithiothreitol. The resulting mixture was kept at 37°C for one hour to perform the specific cleavage reaction and a cleaved mixture solution containing cleavage products was obtained.

The sample of cleaved mixture solution was charged on the slab gel support of the kit and electrophoresed at voltage of 500 V using 50 mM tris-borate buffer solution (pH 8.3) containing 1 mM of EDTA as an electrode solution. The electrophoresis was continued until the marker dye previously added to the sample reached the bottom end of the gel, and the starting position thereof was marked with a $^{32}P$-containing ink.

The kit was exposed to light to erase a noise recorded on the stimulable phosphor sheet. The kit was introduced into a read-out apparatus as shown in Figure 2 and kept at room temperature (approx. 25°C) for one minute to perform the exposure, and then read out to obtain locational information which represented electrophoretic positions of the fragments (cleavage products) labelled with $^{32}P$ based on the starting position marked with the $^{32}P$-containing ink.

The slab gel support was separated together with the covering material from the kit. According to thus obtained locational information, the portions containing the fragments with $^{32}P$ label were cut out of the gel with a thin razor blade, and the gel portion segments were placed in a test tube.

For confirmation, the residual gel (a part of which has been removed as above) was laid again on the stimulable phosphor sheet, and the read-out operation was carried out thereto in the read-out apparatus to examine absence of the $^{32}P$-labelled fragment. The result of the examination indicated that the $^{32}P$-labelled fragments had been completely removed from the gel. Thus, it was confirmed that the accuracy of the locational information on $^{32}P$-labelled fragments obtained by means of the above stimulable phosphor sheet provided with the support medium was sufficiently high.

### Claims

1. An autoradiographic process for obtaining information on one or two dimensional location of radioactively labelled substances originating from a biopolymer on a support medium, comprising the steps performed successively in the following order and with the apparatus used being shielded from outside light:

step 1: electrophoretically resolving the radioactively labelled substances on the support medium which is provided on a stimulable phosphor sheet;

step 2: erasing a radiation energy absorbed in the stimulable phosphor sheet during the performance step (1), by irradiating the stimulable phosphor sheet with light;

step 3: allowing the stimulable phosphor sheet to absorb at least a portion of radiation energy emitted by the resolved radioactively labelled substances in the support medium; and

step 4: irradiating said stimulable phosphor sheet together with the support medium with an electromagnetic wave to release a radiation energy stored in the phosphor sheet as a stimulated emission and detecting the stimulated emission, to obtain locational information on the resolved radioactively labelled substances on the support medium.

2. The autoradiographic process as claimed in claim 1, wherein the labelled substances are labelled nucleic acids, their derivatives or their cleavage products.

3. The autoradiographic process as claimed in claim 1, wherein said locational information on the radioactively labelled substances obtained in step 4 is in the form of an image.

4. The autoradiographic process as claimed in claim 1, wherein said locational information on the radioactively labelled substances obtained in step 4 is in the form of symbols, numerals or a combination of symbols and numerals.

5. The autoradiographic process as claimed in claim 1, wherein a drying treatment step is interposed between step 1 and step 2.

**Patentansprüche**

1. Autoradiographisches Verfahren zum Erhalten von Information über den ein- oder zweidimensionalen Ort radioaktiv gekennzeichneter Substanzen, die von einem Biopolymer auf einem Trägermedium stammen, umfassend die nacheinander in der nachfolgenden Reihenfolge ausgeführten Schritte, wobei die verwendete Vorrichtung gegen Licht von außen abgeschirmt ist:

Schritt 1: Elektrophorestisches Auflösen der radioaktiv gekennzeichneten Substanzen auf dem Trägermedium, das auf einer anregbaren Phosphorfolie angeordnet ist;

Schritt 2: Löschen einer Strahlungsenergie, die in der anregbaren Phosphorfolie absorbiert wird, während der Ausführung des Schritts 1 durch Bestrahlung der anregbaren Phosphorfolie mit Licht;

Schritt 3: Zulassen, daß die anregbare Phosphorfolie wenigstens einen Teil der von den aufgelösten, radioaktiv gekennzeichneten Substanzen in dem Trägermedium absorbiert;

Schritt 4: Bestrählen der anregbaren Phosphorfolie zusammen mit dem Trägermedium mit einer elektromagnetischen Welle, um eine in der Phosphorfolie gespeicherte Strahlungsenergie als eine angeregte Emission freizugeben und Detektieren der angeregten Emission, um Ortsinformation über die aufgelösten, radioaktiv gekennzeichneten Substanzen auf dem Trägermedium zu erhalten.

2. Autoradiographisches Verfahren nach Anspruch 1, bei dem die gekennzeichneten Substanzen gekennzeichnete Nukleinsäuren, ihre Derivate und ihre Spaltprodukte sind.

3. Autoradiographisches Verfahren nach Anspruch 1, bei dem die im Schritt 4 erhaltene Ortsinformation über die radioaktiv gekennzeichneten Substanzen in Form eines Bildes vorliegt.

4. Autoradiographisches Verfahren nach Anspruch 1, bei dem die im Schritt 4 erhaltene Ortsinformation über die radiographisch gekennzeichneten Substanzen in Form von Symbolen, Zahlen oder einer Kombination aus Symbolen und Zahlen vorliegt.

5. Autoradiographisches Verfahren nach Anspruch 1, bei dem ein Trocknungsbehandlungsschritt zwischen den Schritt 1 und den Schritt 2 eingeschoben ist.

**Revendications**

1. Un procédé autoradiographique pour obtenir des informations sur un emplacement à une ou deux dimensions de substances marquées radioactivement originaires d'un biopolymère sur un moyen de support, comprenant les étapes exécutées successivement dans l'ordre suivant et avec l'appareil utilisé étant protégé de la lumière extérieure:

étape 1: résolution électrophorétiquement des substances marquées radioactivement sur le moyen de support qui est fourni sur une feuille de substance fluorescente stimulable;

étape 2: effacement d'une énergie de rayonnement absorbée dans la feuille de substance fluorescente au cours de l'exécution de la première étape, en irradiant la feuille de substance fluorescente stimulable avec de la lumière;

étape 3: permettre à la feuille de substance fluorescente stimulable d'absorber au moins une portion de l'énergie de rayonnement émise par les substances marquées radioactivement résolues dans le moyen de support; et

étape 4: irradier ladite feuille de substance fluorescente stimulable ainsi que le moyen de support avec une onde électromagnétique pour libérer une énergie de rayonnement stockée dans la feuille de substance fluorescente en tant qu'émission stimulée et détecter l'émission stimulée, pour obtenir des informations découlant de la situation sur les substances marquées radioactivement résolues sur le moyen de support.

2. Le procédé autoradiographique selon la revendication 1, où les substances marquées sont marquées aux acides nucléiques, à leurs dérivés ou à leurs produits de dédoublement.

3. Le procédé autoradiographique selon la revendication 1, où lesdites informations découlant de la situation sur les substances marquées radioactivement obtenues à l'étape 4 sont sous la forme d'une image.

4. Le procédé autoradiographique selon la revendication 1, où lesdites informations découlant de la situation sur les substances marquées radioactivement obtenues à l'étape 4 sont sous la forme de symboles, de nombres ou d'une combinaison de symboles et de nombres.

5. Le procédé autoradiographique selon la revendication 1, où une étape traitement de séchage est intercalée entre l'étape 1 et l'étape 2.

# F I G.  1

# F I G. 2